# EUROPEAN PATENT SPECIFICATION

(11) **EP 4 189 456 B1**
(45) Date of publication and mention of the grant of the patent: **02.09.2026**
(21) Application number: 20754654.0
(22) Date of filing: 28.07.2020
(51) Int. Cl.: G02B 21/00, G02B 21/36

(54) **METHOD AND LIGHT MICROSCOPE WITH A PLURALITY OF ARRAYS OF PHOTON-COUNTING DETECTOR ELEMENTS**
VERFAHREN UND LICHTMIKROSKOP MIT EINER VIELZAHL VON ARRAYS VON PHOTONENZÄHLENDEN DETEKTORELEMENTEN
PROCÉDÉ ET MICROSCOPE OPTIQUE COMPRENANT UNE PLURALITÉ DE RÉSEAUX D'ÉLÉMENTS DÉTECTEURS DE COMPTAGE DE PHOTONS

(43) Date of publication of application: 07.06.2023
(73) Proprietor: Carl Zeiss Microscopy GmbH, 07745 Jena (DE); Ecole Polytechnique Fédérale de Lausanne (EPFL), 1015 Lausanne (CH)
(72) Inventor: ANHUT, Tiemo, 07745 Jena (DE); ANTOLOVIC, Ivan Michel, 1010 Lausanne (CH); SCHWEDT, Daniel, 07745 Jena (DE); CHARBON, Edoardo, 1008 Jouxtens-Mezery (CH); BRUSCHINI, Claudio, 1168 Villars-sous-Yens (CH)
(74) Representative: Ridderbusch, Oliver
(86) International application number: PCT/EP2020/071248
(87) International publication number: WO 2022/022807

(56) References cited:
- ALEKSANDRA SRODA ET AL: "SOFISM: Super-resolution optical fluctuation image scanning microscopy", ARXIV.ORG, CORNELL UNIVERSITY LIBRARY, 201 OLIN LIBRARY CORNELL UNIVERSITY ITHACA, NY 14853, 1 February 2020 (2020-02-01), XP081616754
- BRUSCHINI CLAUDIO ET AL: "Single-photon avalanche diode imagers inbiophotonics: review and outlook", LIGHT: SCIENCE & APPLICATIONS, vol. 8, no. 1, 18 September 2019 (2019-09-18), XP055783939, DOI: 10.1038/s41377-019-0191-5
- SEGAL MAYA ET AL: "High-throughput smFRET analysis of freely diffusing nucleic acid molecules and associated proteins", METHODS, ACADEMIC PRESS, NL, vol. 169, 26 July 2019 (2019-07-26), pages 21 - 45, XP085920463, ISSN: 1046-2023, [retrieved on 20190726], DOI: 10.1016/J.YMETH.2019.07.021
- TYNDALL DAVID ET AL: "Automatic laser alignment for multifocal microscopy using a LCOS SLM and a 32x32 pixel CMOS SPAD array", ADVANCED MICROSCOPY TECHNIQUES II, SPIE, 1000 20TH ST. BELLINGHAM WA 98225-6705 USA, vol. 8086, no. 1, 9 June 2011 (2011-06-09), pages 1 - 6, XP060015087, DOI: 10.1117/12.889738
- RYAN A. COLYER ET AL: "High-throughput FCS using an LCOS spatial light modulator and an 8 x 1 SPAD array", BIOMEDICAL OPTICS EXPRESS, vol. 1, no. 5, 15 November 2010 (2010-11-15), pages 1408 - 1431, XP055174601, ISSN: 2156-7085, DOI: 10.1364/BOE.1.001408
- BURGE: "First order optics", 24 August 2015 (2015-08-24), XP055784305, Retrieved from the Internet <URL:https://wp.optics.arizona.edu/optomech/wp-content/uploads/sites/53/2016/08/2-First-order-optics.pdf> [retrieved on 20210310]
- ANDREW G YORK ET AL: "Resolution doubling in live, multicellular organisms via multifocal structured illumination microscopy", NATURE METHODS, vol. 9, no. 7, 1 July 2012 (2012-07-01), New York, pages 749 - 754, XP055501784, ISSN: 1548-7091, DOI: 10.1038/nmeth.2025

## Description

### FIELD OF THE DISCLOSURE

The present disclosure relates to a light microscope and a method for operating a light microscope.

### BACKGROUND OF THE DISCLOSURE

Light microscopes are used in a wide variety of applications such as life sciences or material testing.

In particular the growing interest for live cell research requires light microscopes with a particularly high sensitivity. The peak intensity of excitation light with which a specimen is illuminated should be low to avoid photo-toxic effects in biological tissue caused by high light intensities. However, in order to gather the desired information from the specimen, the acquired data must have a sufficient signal to noise ratio (SNR). Noise sources apart from quantum noise should thus be avoided.

In common laser scanning microscopes (LSMs), fluorescence light is detected with photomultipliers or photomultiplier tubes (PMTs) which in general convert a photon flux into a highly amplified electrical current. The amplification process, however, adds multiplication noise to the current signal. Thus, the SNR of the measured signal is reduced with respect to the quantum limit of a photon flux with a Poissonian distribution. This is even more the case if the photon flux is decreased in order to reduce phototoxicity, and at the same time the PMT gain is increased in order to achieve a certain dynamic range in the acquired image.

In principle, the multiplication noise can be completely avoided by means of photon counting. In this case, the electrical signal is amplified such that single pulses that are assignable to single photon detection events can be discriminated. These pulses are counted and the number of pulses is a measure of the photon flux strength hitting the sensor within a certain time period. Amplification noise merely causes a statistical variation of the pulse height but does not influence the number of pulses and hence does not adversely affect the measurement.

However, after a pulse triggered by a photon hitting the sensor has been detected, the sensor cannot register another photon hitting the sensor and needs to be reset into the photo-sensitive state. The period in which no further photon can be detected is called the deadtime and lasts from the moment a first photon is detected until the moment the sensor is fully reset to detect a second photon. The deadtime may amount to a few tens of nanoseconds and leads to a limitation of the count rate of the photon counting sensor. The count rate limitation of a single detector element is in general in the order of a few Megahertz.

The count rate limit can be increased by about a factor of ten by distributing the detection point spread function (PSF) across an array of at least ten photon-counting detector elements. In general, the count rate limit can be increased by N if the signal is distributed over at least N elements depending on the spatial distribution of the light intensity. Such an array may comprise Single Photon Avalanche Diodes (SPADs). In this case, the photons of detection light, e.g. fluorescence light, hit the sensor array statistically distributed with regard to the lateral position on the array. Thus, the probability that a photon hits a sensor element that is just to be reset-thus being within its dead time-is significantly reduced. So, the limitation of the count rate depends on the size of the photon-counting array, i.e., the total number of its photon-counting detector elements that can be illuminated, and the spatial distribution of the light intensity.

A signal increase by a factor of ten increases the SNR by a factor of about three as the SNR of a Poissonian counting process is proportional to the square root of the number of detected events. Increasing the peak intensity of the illumination light (excitation light), however, should be avoided and this also limits the number of detector elements that are illuminated.

In order to further increase the SNR while avoiding unduly high excitation intensities, the signal from a certain sample position should be averaged over a prolonged effective pixel dwell time. This increases the number of detected photons from that position, and as the SNR depends on the square root of the photon number, image quality increases as well. Averaging may be effected in various ways. For example, the frequency of scan mirrors of the LSM can be reduced, thus directly increasing the pixel dwell time. Alternatively, the same sample position may be scanned various times and the various data values are then added. Both approaches, however, extend the image acquisition time of conventional LSMs which may be undesired when, for example, biological processes of living specimen are examined.

Rather than increasing the image acquisition time, it is also possible to simultaneously scan a plurality of laser spots across the specimen. A generic method for operating a light microscope thus comprises: emitting and guiding illumination light as a plurality of illumination light beams from one or more light sources towards a specimen positioning location and forming a plurality of separated illumination light spots at the specimen positioning location; and guiding detection light beams coming from the illumination light spots at the specimen positioning location to a detector comprising a plurality of sensor arrays. Each sensor array comprises photon-counting detector elements, and the detection light forms a plurality of (detection) light spots on the sensor arrays, wherein detection light beams from different illumination light spots at the specimen positioning location are guided to different sensor arrays.

Similarly, a generic light microscope comprises at least one light source and optical elements, e.g., an objective, condenser or other lenses or mirrors, for illuminating a specimen at a specimen positioning location with a plurality of illumination light beams which form a plurality of separated illumination light spots at the specimen positioning location. The microscope further comprises a detector with a plurality of sensor arrays. Each sensor array comprises photon-counting detector elements for measuring light spots formed on the sensor arrays by detection light beams coming from the specimen. Detection light beams from different illumination light spots at the specimen positioning location are guided to different sensor arrays. The microscope also comprises a controller for controlling at least the one or more light sources and the detector.

However, an increased number of simultaneously used light spots that are scanned over the specimen also increase the number of required photon-counting detector elements. Each of these pixel elements contributes to the overall dark noise of the detector, and thus an increased number of pixel elements may also have a negative impact on the SNR.

Aleksandra Sroda et al: "SOFISM: Super-resolution optical fluctuation image scanning microscopy", arxiv.org, arXiv:2002.00182v1 [physics.optics] 1 Feb 2020 describes a light microscope in which illumination light is guided to a specimen as one or more illumination light beams, and thus separated illumination light spots can be formed at the specimen. Detection light beams coming from the illumination light spots are guided to a detector. In the case of just one illumination light spot, using a sensor array consisting of 14 detectors is suggested. In the case of several illumination light spots, using a larger sensor array is suggested.

Bruschini Claudio et al: "Single-photon avalanche diode imagers in biophotonics: review and outlook", LIGHT: SCIENCE & APPLICATIONS, vol. 8, no. 1, 18 September 2019 (2019-09-18), DOI: 10.1038/s41377-019-0191-5 describes SPAD sensors, in particular sensor arrays, binning pixels together and using counter pixels. Segal Maya et al: "High-throughput smFRET analysis of freely diffusing nucleic acid molecules and associated proteins", METHODS, ACADEMIC PRESS, vol. 169, 26 July 2019 (2019-07-26), pages 21-45, ISSN: 1046-2023, DOI: 10.1016/J.YMETH.2019.07.021 describes a setup with two separate SPAD arrays, each SPAD array being mounted on micro-positioners allowing adjustments of the detectors in all three directions. Tyndall David et al: "Automatic laser alignment for multifocal microscopy using a LCOS SLM and a 32x32 pixel CMOS SPAD array", ADVANCED MICROSCOPY TECHNIQUES II, SPIE, vol. 8086, no. 1, 9 June 2011, pages 1-6, DOI: 10.1117/12.889738 describes a confocal microscopy technique in which a 32x32 SPAD array is used which is adjusted in its position through closed-loop feedback. Ryan A. Colyer et al: "High-throughput FCS using an LCOS spatial light modulator and an 8x1 SPAD array", Biomedical Optics Express, vol. 1, no. 5, 15 November 2010, pages 1408-1431, ISSN: 2156-7085, DOI: 10.1364/BOE.1.001408 describes a Fluorescence Correlation Spectroscopy technique which uses a SPAD array that has been moved in X, Y and Z directions in order to maximize the recorded intensity detected by the corresponding center SPAD.

### SUMMARY OF THE DISCLOSURE

It is an **object** of the invention to provide a light microscope and a method which achieve a particularly high image quality and measurement sensitivity, without unduly long measurement durations.

The above-defined object is reached with a method comprising the features of claim 1, and a light microscope as defined in claim 10.

Preferred embodiments are given in the dependent claims as well as in the following description, in particular in connection with the attached figures.

The above-mentioned method is, according to the invention, characterized, among others, by
the step of analyzing measured signals from the sensor arrays to determine positional information about the light spots on the sensor arrays, and performing an adjustment process to adjust where the light spots hit the sensor arrays based on the positional information. According to the invention, the light microscope of the above-mentioned kind is characterized in that the controller is configured to analyze measured signals from the sensor arrays to determine positional information about the light spots on the sensor arrays, and instruct an adjustment device to adjust where the light spots hit the sensor arrays based on the positional information.

By using a plurality of light spots and ensuring a correct alignment of the light spots on the sensor arrays, a large share of all sensor elements can be efficiently used for actual measurements. It can be mostly avoided that sensor elements are not illuminated but contribute to dark noise. The light spots may have a comparably small pitch, which can be favorable to scan a predefined specimen area, and the sensor arrays are nevertheless well-positioned to correctly distinguish the light spots. A situation in which a light spot only partially hits a sensor array can be avoided.

### Adjusting a relative position between detection light spots and the sensor arrays

In the adjustment process, one or more of the following adjustments may be carried out depending on measured signals from the photon-counting detector elements.

The adjustment process may comprise an adjustment step that affects a positional relationship between all detection light spots and all sensor arrays, in particular equally. As defined in the independent claims, the process comprises an individual adjustment of the positional relationship between a single detection light spot and the sensor array which it hits. The individual adjustment may achieve that distances between the detection light spots match distances between the sensor arrays. The (global) adjustment of the positional relationship between all detection light spots and all sensor arrays may achieve that the array of detection light spots as a whole is properly aligned.

In general, adjusting where the light spots hit the sensor arrays is performed by any relative movement between the light spots and the sensor arrays. According to the claimed invention, a light path of detection light is adjusted by movable optical elements such as reflective or refractive elements. In addition, a common optical element may be adjusted, wherein all detection light beams travel via this common optical element, e.g., a tiltable glass plate. Alternatively or additionally, the sensor arrays may be moved as a whole or independently from each other, either during specimen observation, in initial calibration procedures and/or during fabrication of the microscope or the detector. The sensor arrays may be jointly moved transverse to an optical axis of the detection light beams hitting the sensor arrays, in particular within a plane perpendicular to the optical axis. These variants will be described in more detail further below.

While the sensor arrays are usually arranged perpendicular to the optical axis of the detection light beams, the sensor arrays may also be tiltably mounted. For example, a printed circuit board (PCB) on which all sensor arrays are arranged may be supported such that it can be tilted relative to the optical axis of the detection light beams. In this case, all sensor arrays can be jointly tilted. The sensor arrays may be tilted depending on differences between detection light beams, e.g., in case that axial positions of detection light beams differ from each other. Detection light beams may also have different intensities in which case it may be useful to vary the light spot size on the sensor arrays by tilting the sensor arrays. A controller may be configured to instruct the adjustment device to perform the tilting depending on measured signals from the photon-counting detector elements and/or depending on how the light source is controlled.

The adjustment may also comprise performing a relative rotation between the sensor arrays and the detection light beams. In these cases, a rotation axis is parallel to the optical axis of the detection light beams. For example, the sensor arrays may be jointly rotated (i.e., by rotating a common component such as a PCB on which all sensor arrays are arranged). Alternatively, an image rotator such as an image rotation prism may be arranged in the beam path of the detection light beams and may be adjusted to avoid a rotational mismatch between the arrangement of sensor arrays and the light spots on the sensor arrays.

Furthermore, an optical zoom element may be provided in a beam path of the illumination light beams and/or in a beam path of the detection light beams. As all light beams are directed via this zoom element, a pitch between the light beams and thus between the light spots on the sensor arrays can be changed by adjusting the zoom element. The zoom element may be adjusted such that the pitch of the detection light spots matches a pitch of the sensor arrays.

### Adjusting the position of the sensor arrays

According to the claimed invention, the adjustment where the light spots hit the sensor arrays is performed during manufacture of the detector. In such cases, the plurality of sensor arrays may first be movably placed on a common PCB and operatively connected such that the detector elements are fully functional and can be read out. For example, bonding material may be warmed to allow fine-adjusting movements between the sensor arrays and the PCB. The illumination light is now emitted to form the plurality of light spots on the sensor arrays. As described elsewhere, the illumination light may itself form the light spots on the sensor array or may impinge on a specimen or reference object which emits detection light such as fluorescence light. The light source used here may be the same or a different light source used for specimen observation. The light spots may form the same array as used for specimen examination but with a lower or different intensity. A controller interprets measured signals of the sensor arrays, e.g., photon count values, and outputs a positioning command according to which the sensor arrays are moved. For example, the controller may determine spot positions from the measured signals and the positioning commands are such that the spot position is adjusted to be aligned with the centre of the respective sensor array. Alternatively, the controller may determine an aggregated signal for each sensor array (e.g., a summed or averaged photon count value of all detector elements of one sensor array) and positioning commands are chosen to maximize the aggregated signal. An optimization routine may be used to adjust the positions of the sensor arrays based on the measured signals. Each sensor array may be formed by a respective chip and may be moved independently from the other chips. Alternatively, several or all of the sensor arrays may be formed by one chip which is moved relative to the PCB.

### Adjusting movable optical elements in front of the sensor arrays

For adjusting where the light spots hit the sensor arrays during manufacture of the detector, optical elements are movably placed in front of the sensor arrays. The optical elements are arranged in the beam paths to the sensor arrays and can be moved independently from each other to independently affect the positions of the light spots on the sensor arrays. The number of optical elements may match the number of sensor arrays or alternatively neighbouring sensor arrays may share a common optical element. Examples for optical elements are tiltable glass plates or lenses, movable transparent wedges or reflective elements. The optical elements may be placed directly on the sensor arrays or distanced from the sensor arrays but coupled to the sensor arrays to ensure a stable positional relationship to the sensor arrays after the adjustment. Light travels via the optical elements to the sensor arrays and measured signals of the sensor array are supplied to a controller as described above. The controller generates positioning commands based on the measured signals and the optical elements are moved according to the positioning commands. These steps may be repeated in an optimization routine until the light spots are centred on the sensor arrays.

For example, the optical elements may be tiltable transparent plates / glass plates arranged in front of or on the sensor arrays. Each glass plate is supported to be tiltable in two directions relative to the optical axis (e.g., towards an X and Y axes which are perpendicular to a Z axis that coincides with the optical axis).

The above procedure is performed during manufacture of the detector and the optical elements are fixated with glue once properly tilted according to the positioning commands.

The optical elements may be mounted on motorized units in a way that an automated alignment to the sensor arrays becomes possible.

### Binning based on positional information

A binning pattern with a plurality of superpixels may be variably set for the detector. Each superpixel is formed by jointly reading out several of the photon-counting detector elements to produce a common photon count value. Each detector element may be either deactivated or assigned to one of the superpixels. The binning pattern may be set in dependence of the determined positional information. For example, a center position of each light spot on the sensor arrays may be determined from the positional information, and the superpixels may then be aligned with regard to the center positions. In particular, one or more superpixels may be assigned to each light spot and may be arranged symmetrical to the respective light spot. In the case of circular or ring-shaped superpixels, the symmetrical arrangement shall be understood such that a center of the circle or ring shape coincides with the determined center position of the respective light spot. Also the number of detector elements binned into the same superpixel may be set in dependence of the positional information, in particular based on a cross sectional shape or size of the light spots. If the light spots have different sizes, also the superpixels for different light spots may be set to have different sizes, i.e., to comprise different numbers of detector elements. Setting the binning pattern may form a part of er the complete adjustment process, or, alternatively, setting the binning pattern may form a separate process in addition to the described exemplary adjustment processes.

### Design of the sensor arrays

In some embodiments, each sensor array is illuminated by one of the detection light spots. The sensor arrays may be formed by different regions of the same chip or by different chips. These designs are described further below with regard to the figures, and have in common that the sensor arrays are arranged on a common PCB or in a common chip package. The sensor arrays shall be precisely aligned in a matrix corresponding to a matrix pattern of the light beams / light spots. Typically, the pattern of light spots remains fixed and thus the arrangement of sensor arrays should be correspondingly chosen. A pitch (distance) between the sensor arrays should match a pitch of the light spots. Furthermore, the relative position between the light spot array as a whole relative to the detector with all sensor arrays shall be adjusted to be properly aligned.

Using a common PCB or package has several advantages, in particular that the sensor arrays are in a precisely defined position relative to each other. The distances between the sensor arrays are stable even if the detector receives a shock during transport or in case of temperature changes. The system can also be robust against mutual misalignment between the various light paths. Precise timing between the detector elements of different sensor arrays is easier possible due to short electrical lines and/or symmetric signal trees, e.g., a symmetric clock tree. The arrangement of multiple sensor arrays on a common PCB allows a higher chip production density, e.g., through CMOS production, as the sensor arrays are placed as modules adjacent to each other on the production wafer. Such sensor arrays can be used in many applications depending on how many modules are combined in one package or on one PCB, while the spacing between the sensor arrays is adjustable. The sensor arrays can be combined into a single large sensor array without spacing between the individual sensor arrays.

For image scanning techniques (Airy scan or photon reassignment techniques), the sensor arrays should be positioned relative to each other with a precision of approximately a tenth of a PSF diameter. This avoids artefacts in a final image due to false positioning. As an illustrative example, the PSF imaged onto one of the sensor arrays may cover an area of five SPAD pixels along the PSF diameter. Then the alignment should achieve a precision of half a pixel pitch, which may be about 10 µm to 20 µm. Alignment with such a precision requires an optical control mechanism when positioning the arrays on the PCB. The positioning may be achieved in an automated fashion by a robotic motion so that the sensor arrays can be kept fixed in position before and while soldering. Precise fabrication methods like pick and place, which is common for surface-mounted devices, may be applied for positioning and soldering of larger chips which, however, contain rather small optically active sensor areas. A similar approach may also be applied for precisely positioning a plurality of sensor arrays within the same package before bonding.

In some variants, the sensor arrays are arranged directly next to each other to form a common array within one chip or on one printed circuit board.

A plurality of bonding pads per sensor array may be provided. At least some of the sensor arrays may be arranged directly next to each other without any bonding pads in between. For example, sensor arrays may have a rectangular shape with bonding pads on just two of the four sides of the rectangular shape. A total number of bonding pads for outputting measured photon-count signals is optionally smaller than a total number of photon-counting detector elements, in which case measured photon-count signals of several photon-counting detector elements are output through the same bonding pad.

Each photon-counting detector element may comprise at least a first memory element and a second memory element to allow read-out of a measured signal from the second memory element during an exposure time in which a photon detection event can be registered in the first memory element of this photon-counting detector element. Each photon-counting detector element may optionally be formed by a single-photon avalanche detector comprising a SPAD anode which forms the first memory element, wherein the second memory element is configured to receive a measured signal from the first memory element.

In some variants, the photon-counting detector elements of the same sensor array are arranged in columns and rows. A common read-out line may then connect the photon-counting detector elements of the same column to one of the bonding pads. Row addresses for the photon-counting detector elements may be used to distinguish between measured signals from the photon-counting detector elements of the same column.

Alternatively or additionally, multi-bit counters may be provided for reducing the number of required bonding pads. A multi-bit counter counts several photon detection events of the same or different photon-counting detector elements.

Furthermore, a plurality of through-silicon vias may additionally or alternatively be provided for each sensor array. Preferably, several of the photon-counting detector elements share one of the through-silicon vias.

### General features

An illumination light spot may be formed by any light distribution of illumination light. Similarly, a detection light spot may be formed by any light distribution of detection light. The position of a light spot may be understood as a center of mass of the light distribution. A light distribution may generally have any cross-sectional intensity distribution which may form one continuous area or two or more separated areas. In particular, one light distribution may thus comprise two or more separated areas as used in twisted or double-helix PSFs and/or for 3D coding of the PSF. One detection light spot, as understood herein, may thus be formed by a detection light distribution comprising laterally separated areas of generally any shape. Different detection light spots may in general partially overlap on the detector and are distinguished from one another in that they are caused by different illumination light distributions.

By guiding detection light beams from different illumination light spots to different sensor arrays, each detection light spot/distribution may be measured by a distinct sensor array. Alternatively, the feature may be implemented in that some of the detection light beams from different illumination light spots are directed to different sensor arrays whereas some detection light beams share the same sensor array. The number of sensor arrays may be equal to the number of detection or illumination light spots. Alternatively, the number of sensor arrays may also be larger in which case one or more sensor arrays do not receive detection light that emanates from one of the illumination light spots; those sensor arrays may be temporarily deactivated or used for other purposes, e.g., for calibration, for normalization or as a trigger. In case of twisted PSFs or 3D coding of PSFs, one sensor array receives two or more laterally separated light spot parts belonging to the same PSF / light distribution.

The light spots formed on the sensor arrays may have any shapes. Illumination light beams with a circular cross-section may lead to Gaussian-like shaped distributions as (detection) light spots. Alternatively, each illumination light beam may have an elongated cross-section, leading to lines as light spots on the sensor arrays. Multiple illumination lines may be preferred for scanning a specimen to increase image acquisition speed. The light beams may have common or individual beam forming elements. The light distributions of the various beams may also differ.

A light microscope may be defined as comprising a specimen holder providing a specimen positioning location and an objective, in particular an infinity corrected objective which sets the image distance to infinity. The specimen positioning location may be understood as a position where a specimen to be examined shall be arranged.

Depending on a current situation, a reference object may be used instead of the specimen or there may be no object at all, e.g., for certain calibration steps. The objective may be arranged to guide or focus illumination light on the specimen. The objective may additionally or alternatively be arranged to receive detection light emanating from the specimen and to guide the detection light towards the sensor array. Generally, also distinct illumination and detection objectives may be used.

The adjustment device may be configured to perform any of the adjustment processes described herein. In particular, the adjustment device may comprise one or more motors, actuators, piezo elements or other means suitable for moving the components described with regard to the adjustment processes. Those components may in particular comprise a wedge, a tiltable glass plate, an optical zoom element, other optical elements, a spatial light modulator or the detector itself. Depending on the component to be controlled, the adjustment device may also be formed by electronics without movable elements. In particular, the adjustment device may comprise or be formed by a processor or other computation unit configured to set a binning pattern of the detector. In some variants, the adjustment device and the controller are formed by one unit.

The microscope may further comprise a tube with a tube lens arranged in a beam path between the objective and the detector, to focus light from the objective into an (intermediate) image plane. In contrast to other optical systems, a light microscope produces at least one intermediate image plane. It may further comprise an illumination port to which the light source can be connected, for example one or more lasers. Detection light emanating from the specimen may be of any kind, e.g., fluorescence or phosphorescence light, illumination light that is scattered, reflected, diffracted or influenced by the specimen through other mechanisms, illumination light that is transmitted through the specimen, light emanating from the specimen for other reasons which may at least partially be caused by the illumination light, e.g., due to linear laser excitation, multi-photon excitation, phosphorescence, CARS (coherent anti-Stokes Raman scattering), SRS (stimulated Raman scattering) or incoherent or partially coherent light excitation. In general, detection light may also be emitted due to effects unrelated to an illumination of a specimen. Furthermore, the term detection light may also be used in reference measurements or test measurements to refer to any light measured by the detector, e.g., cases in which (other) light sources illuminate the detector and no specimen is provided.

The illumination light beams shall be understood as light beams that are directed at laterally different places at the specimen positioning location. The illumination light beams share some or all optical elements, e.g., all illumination light beams may be directed through the same objective. The differentiation between illumination and detection light (beams) shall indicate whether light travels towards the specimen positioning location or from the specimen position location towards the detector. However, these terms do not necessarily indicate different wavelengths or properties of the illumination light and detection light. The terms "detection light spots" and "light spots on the sensor arrays" are generally used synonymously. In contrast, illumination light spots describe light spots that are spaced from each other at the specimen positioning location. In several described variants, the illumination light spots are laterally distanced light spots in a specimen plane at the specimen positioning location. However, these variants may also be modified such that the illumination spots are axially spaced from each other at the specimen positioning location. An axial distance may be produced additionally or alternatively to a lateral distance between the illumination light spots. In particular, the illumination light beams may be formed as described in WO 2015/121188 A1.

Positional information about the light spots on the sensor arrays may be understood as any information derived from measured signals of the detector elements which is indicative of or depends on the positions of the light spots on the sensor arrays. For example, positional information may refer to information describing which or how many detector elements of one sensor array measure a signal (e.g., have a photon count rate above a predefined value). The positional information may also describe a centre of the light spot relative to the corresponding sensor array. Also a photon count value aggregated from one, several or all sensor arrays may be used as positional information because the photon count value(s) depend on whether the position of the detection light spots is aligned with the sensor arrays.

The adjustment process described herein may comprise one step of adjusting one of the described components, or it may comprise a routine in which the component is adjusted several times, and in each case measured signals from the detector elements are analysed to determine how to adjust the component. For example, a transparent glass plate through which all detection light beams are transmitted (but not the illumination light beams) may be tilted to different angles. The controller may determine the tilt angle with which the position of the detection light spots matches best the positions of the sensor arrays, e.g., by finding a maximum of the aggregated photon count values of all sensor arrays in dependence of the tilt angle. Each aggregated photon count value may constitute a positional information for the present tilt angle setting. Photon count values can be derived at any stage of the signal chain or from respectively acquired images. The routine may first take measurements with different tilt angles and then analyse the positional information, or the routine may analyse measurements as soon as they are acquired to determine the next tilt angle to be tested, or more general, the next setting of the component to be adjusted. The adjustment process may also comprise adjustment of several components, e.g., a component that affects all detection light beams and one or more components that affect only one or only some of the detection light beams.

The term "measured signal" refers to an output of one or more photon-counting detector elements or a signal derived therefrom. The term may be used synonymously with a photon-count signal. A photon-count value, i.e., a number indicative of the number of detected photons, may be derived from measured signals, e.g., the number of measured signals.

The light microscope may further comprise a scanner arranged between the objective and the light source. The controller controls the scanner to perform a scan of the specimen in which illumination light is scanned over the specimen. Optionally, the scanner may also direct the detection light coming from the objective towards the photon-counting detector arrays (descanned setup). The scanner may be understood as a device configured to adjustably deflect light beams. It may comprise one or more movable optical elements such as mirrors, lenses or prisms. Alternatively it may also adjustably deflect the illumination light based on acousto-optical or electro-optical effects.

The PSF may be understood to define how illumination light and detection light are guided by the light microscope. In particular, the PSF may be seen as comprised of an illumination PSF and a detection PSF, wherein the illumination PSF defines how a point of the light source is imaged into the specimen plane, and the detection PSF defines how a point located at the specimen plane is imaged into the plane of the sensor array. A size of a detection light spot on the sensor array may correspond to a PSF size in the image scan technique or in confocal imaging. The sensor array may be positioned in or near the image plane or intermediate image plane. However, the sensor array may also be distanced from the image plane, e.g., in or near a pupil plane or a plane with separated pupils.

The photon-counting detector elements, for brevity also referred to as "detector elements" may in particular be SPADs (single photon avalanche diodes) which are in particular operated in the so-called Geiger mode. In the Geiger mode, a voltage V_{OP} is applied at the diode of the SPAD which exceeds the breakdown voltage of the diode by an excess bias voltage. As a consequence, a photon absorption may lead to a charge avalanche and thus a countable event. The sensor array may correspondingly be referred to as a SPAD array.

The controller may comprise electronic components such as FPGAs or processing units that may be formed as a single unit or as a distributed system. Functions of the controller may be implemented as software and/or as hardware. The controller or parts thereof may in particular be arranged as on-chip units next to the sensor array. Parts of the controller may also be provided through server or computer applications that communicate with other components of the light microscope through a network.

For easier intelligibility, the expression "light spot" is frequently used in this disclosure to refer to the light distribution on the specimen or on the sensor array(s). More generally, the "light spot" may be understood as any light distribution, e.g. a ring pattern, one or more lines or several spots or rings.

The invention may also be applied to other sensor devices which may not necessarily require a microscope and hence do not necessarily fall within the scope of the claims, for example in material analysis, camera or surveillance systems, astronomy or production supervision. The detector, light source and controller described herein may be part of other light measurement apparatuses, e.g., for distance measurements, quality control, surveillance, in portable / hand-held devices, in medical devices or as vehicle sensors. In these regards, a specimen may indicate any kind of object. The intended use of the different embodiments of the light microscope of the invention results in variants of the method of the invention. Similarly, the light microscope of the invention may be configured to carry out the described exemplary methods of the invention. In particular the controller may be configured to control the sensor arrays or other components of the light microscope to carry out the method steps described herein.

### BRIEF DESCRIPTION OF THE DRAWINGS

A better understanding of the invention and various other features and advantages of the present invention will become readily apparent by the following description in connection with the schematic drawings, which are shown by way of example only, and not limitation, wherein like reference numerals may refer to alike or substantially alike components:
- FIG. 1: shows schematically an embodiment of a light microscope according to the invention,
- FIG. 2: shows schematically a detector of the light microscope of the invention;
- FIG. 3: shows schematically cross-sectional view of the detector of FIG. 2 and further components of the light microscope;
- FIG. 4: shows schematically another exemplary embodiment of a detector of the light microscope of the invention;
- FIG. 5: shows schematically another exemplary embodiment of a detector of the light microscope of the invention;
- FIG. 6: shows schematically an exemplary design of a photon-counting detector element of the detector of the light microscope of the invention;
- FIG. 7: shows schematically another exemplary embodiment of a detector of the light microscope of the invention;
- FIG. 8: shows schematically another exemplary embodiment of a detector of the light microscope of the invention;
- FIG. 9: shows schematically another exemplary embodiment of a detector of the light microscope of the invention;
- FIG. 10: shows schematically exemplary embodiments of modular detectors of the light microscope of the invention; and
- FIG. 11: shows schematically another exemplary embodiment of a modular detector of the light microscope of the invention.

### DETAILED DESCRIPTION OF EMBODIMENTS

### FIG. 1

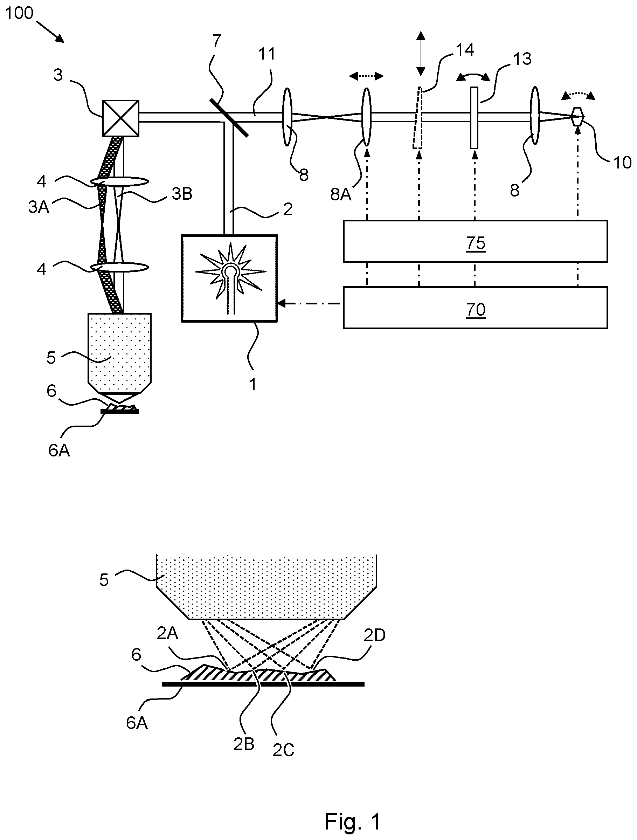

FIG. 1 shows schematically an embodiment of a light microscope 100 of the invention. It comprises a light source 1 which emits illumination light 2 that is guided to a specimen positioning location 6A at which a specimen 6 may be arranged. While merely optional in other embodiments, the example of FIG. 1 shows the illumination light to be guided via a scanner 3, optical elements 4 and an objective 5. The scanner 3 scans the illumination light 2 over specimen 6, resulting in different beam paths 3A, 3B depending on a scanner position.

FIG. 1 shows a descanned setup in which detection light 11 emanating from the specimen 6 is guided with the objective 5, the optical elements 4, and the scanner 3 to a beam splitter 7 which separates the detection light 11 from the illumination light 2. Other designs are possible which do not use a descanned setup. Detection light 11 is guided with further optical elements 8 to a detector 10. If the light microscope 100 is used as a laser scanning microscope, a pinhole or pinhole array may be optionally added, e.g., in an intermediate image plane. Alternatively, detector elements of the detector 10 may be operated in a way to provide the function of a pinhole by restricting the size of the detected light distribution. In the latter case the detector may also be placed directly at the intermediate image plane and may in that way replace the pinhole itself.

The scanner 3 may be, for example, a galvanometer scanner, in particular a quasistatic or resonant galvanometer scanner, a MEMS (microelectromechanical system), an acousto-optical scanner or a different type of scanner with an adjustable light deflecting component or an adjustable refraction index. Also DMDs (digital micromirror devices) and SLMs (spatial light modulators) or any other means to change the direction of light beams are included.

In the exemplary embodiment of FIG. 1, the detection light 11 may be fluorescence light but in other embodiments the detection light 11 may be caused in different ways as described in greater detail in the general description section.

For faster measurements and improved image quality, a multi-beam illumination is used. While the upper part of FIG. 1 shows a simplified beam path of illumination light 2, it is to be understood that the illumination light 2 is formed by a plurality of light beams, as indicated in the enlarged inset in the lower part of FIG. 1: The plurality of light beams form a plurality of illumination light distributions or illumination light spots 2A, 2B, 2C, 2D at the specimen positioning location 6A.

Turning again to the upper part of FIG 1, the light source 1 may comprise different light emitting elements or a common light emitting element for providing the light beams, or the illumination light from which the light beams are formed. For example, a matrix element may be added in the illumination beam path (not shown) and may comprise a plurality of distinct light forwarding elements (such as holes, mirror or lenses) which may be illuminated with the illumination light to form separate light beams. Also light splitting means comprising one or more partially reflecting surfaces may be used to generate the plurality of light beams. Generating the plurality of light beams from a single light beam may take place between beam splitter 7 and scanner 3, e.g., using an optical relay system as described in DE 10 2014 017 003 A1 or in WO2018/073170 A1.

A controller 70 is provided to control at least the light source 1, the scanner 3, an adjustment device 75 and optionally the detector 10. As described in the general description section, the controller 70 may be formed by any adequate hardware computing components and/or software executed by a computation unit.

The detector 10 comprises photon-counting detector elements such as SPADs and shall be formed particularly suitable for the challenges of a multi-beam illumination.

### FIGS. 1 and 2

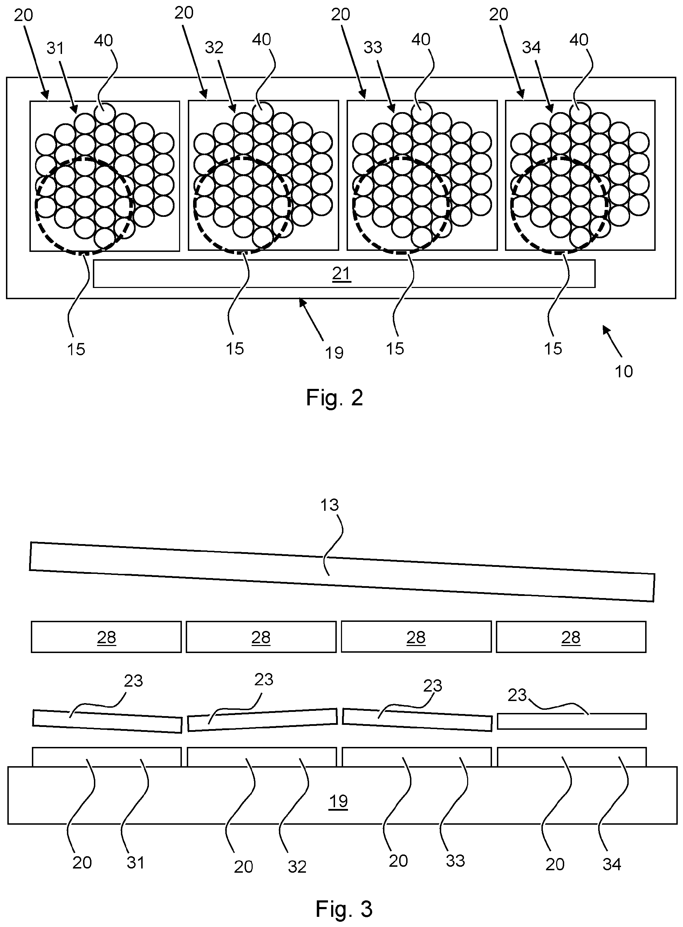

An enlarged depiction of an exemplary detector 10 is shown in FIG. 2. The detector 10 comprises a plurality of sensor arrays 31-34 each comprising several photon-counting detector elements 40. In this example, each sensor array 31-34 is formed on a separate chip 20 and all chips 20 are mounted on a common PCB 19. In alternative designs, the sensor arrays 31-34 are formed on the same chip which is then mounted on the PCB 19. The number of photon-counting detector elements 40 should be kept as low as necessary as each detector element (pixel) 40 contributes to the overall dark noise of the detector 10. As the pixel pitch of such sensor arrays 31-34 is in the order of 10 - 50 µm, it is important to align the detector elements 40 and the positions of the detection light spots as precisely as possible. Further, the pitch of the detection light spots is related to the pitch of the illumination light spots in the specimen, which is kept minimal in order not to be too much limited with respect to the field of view scanned across the specimen and the flexibility concerning the electronic scan-zoom. Moreover, the pitch of the light spots should be precisely matched to obtain a constant shift of the resulting images and to fit to array optics like microlens arrays or pinhole arrays, respectively.

FIG. 2 shows schematically detection light distributions / light spots 15 which are formed by the detection light hitting the detector 10. Each light spot 15 is caused by one of the illumination light spots 2A-2D of FIG. 1 and is measured by one of the sensor arrays 31-34. If a confocal laser scanning setup is used, the light spots 15 remain in place on the sensor arrays 31-34 during the scan. As shown, each light spot 15 covers an area of several detector elements 40 which allows image scan techniques (Airy scan) in which the point spread function (PSF) spread over several detector elements 40 is considered. In the depicted example, the detection light distributions / spots 15 have a circular shape; however, in other embodiments a light distribution may take another form and may also comprise two or more laterally separated parts belonging to a common PSF.

To achieve a particularly good image quality with photon-counting detector elements 40, it is relevant how many detector elements 40 a light spot 15 covers (which may depend on the light intensity, peak intensity, sensitivity of the photon-counting detector elements 40 and other factors). Furthermore, dark noise by photon-counting detector elements 40 not or hardly illuminated is a relevant concern. Background work is provided in commonly owned co-pending applications PCT/EP2019/051927 and PCT/EP2019/058991. Further improvements over these disclosures can be achieved with the multi-beam illumination used for FIG. 2, in which case the importance of a correct alignment between the array of light spots 15 and the sensor arrays 31-34 increases. It can be advantageous if the light spots 15 have a rather small distance to each other, e.g., for better scanning coverage, common use of optical components by several or all light beams or reduced size of optical components. This increases demand for tightly and accurately arranged sensor arrays 31-34. Avoiding unduly large sensor arrays 31-34 is also an object in its own right to limit costs and power supply or to avoid implications on efficiency, e.g. because of dark noise.

As illustrated in FIG. 2, the light spots 15 may be mis-aligned relative to the sensor arrays 31-34. As a consequence, the light spots 15 may only partially hit the sensor arrays 31-34 or a larger number of photon-counting detector elements 40 cannot be purposefully used for measurements.

With reference to FIGS. 1 and 2, the controller 70 is configured to align the light spots 15 relative to the sensor arrays 31-34. For this purpose, measured signals from the sensor arrays 31-34 are read while the light spots 15 hit the sensor arrays 31-34. From the measured signals, the controller 70 determines positional information characteristic of a position of the light spots 15 on the sensor arrays 31-34. The information may be, for example, the position of a center point of one of the light spots 15 or an aggregated photon-count value (e.g. sum or average of the photon-count values of the detector elements 40) of a respective sensor array 31-34 or of all sensor arrays 31-34 combined. Also images acquired with different sensors may be analyzed to derive the positional information.

Based on this information characteristic of the position of the light spots, the controller 70 commands the adjustment device 75 to adjust one or more components of the light microscope 100 to change where the light spots 15 hit the sensor arrays 31-34.

This adjustment may affect the relationship between all light spots 15 jointly relative to all sensor arrays 31-34. Therefore, it is not obligatory to evaluate photon-count values of different sensor arrays 31-34 separately but instead a combined value for all sensor arrays 31-34 may be assessed.

The adjustment device 75 may adjust an angle of a transparent (glass) plate 13 relative to an optical axis of the detection light 11. All light beams run through this transparent plate 13 and hence tilting the transparent plate 13 affects the position of all light spots 15 jointly.

Instead of the tiltable glass plate 13, a transparent wedge 14 may be provided in the beam path of the detection light 11 (shown in FIG. 1 in dotted lines). The adjustment device 75 may shift the wedge 14 to adjust the position of the detection light beams in a direction perpendicular to the optical axis. Two movable wedges 14 that are differently rotated relative to an optical axis may be provided to allow adjustment of the position of the detection light beams in both directions (X and Y directions) relative to the optical axis (Z direction).

Optionally, an optical zoom element 8A may be adjusted by the adjustment device 75 to align a distance between the light spots 15 with a distance between the sensor arrays 31-34 (i.e., a distance from the center of one sensor array to the center of a neighboring sensor array).

In yet further exemplary embodiments, other optical elements are adjusted, in particular an optical element which directs all detection light beams towards the detector 10. The optical element may be a mirror, a refractive element such as a prism or a diffractive element. A position or angle of such an optical element can be adjusted to shift all light spots 15 relative to the sensor arrays 31-34.

Alternatively or additionally, the adjustment device 75 may move the sensor arrays 31-34 as a whole, in particular perpendicular to an optical axis. For example, a common PCB 19 or common chip for all sensor arrays 31-34 may be moved.

An optional Peltier cooler 21 is arranged on the PCB 19. Advantageously, a common Peltier cooler 21 may be used for several or all sensor arrays 31-34 by mounting the sensor arrays 31-34 on one PCB 19. Also further resources can be shared by several sensor arrays 31-34 if arranged on the same PCB 19.

Furthermore, a common PCB 19 can be advantageously used with a compact detection unit as described in WO 2018/073169 A1 for spectrally selective detection of the detection light. In particular, the optical group described in this document may be arranged in the beam path of the detection light before the detector 10.

Figs. 2 shows a 1D arrangement of sensor arrays 31-34 and a 1D array of light spots 15, wherein both 1D arrays are aligned (parallel) to each other. This design may be varied to a 2D arrangement of sensor arrays and a 2D array of light spots. The 2D arrays may have a rectangular or Cartesian geometry or alternatively any other 2D arrangement, e.g. a hexagonal geometry.

Furthermore, the circular light spots 15 of FIG. 2 are just one example, e.g., in case that the light spots 15 form Airy discs. Other light beam cross sections are possible, e.g. elongated ovals or lines. The sensor arrays 31-34 may be correspondingly chosen. The sensor arrays 31-34 may also have different shapes to account for light beams that differ in their cross-section geometries.

The illumination light beams may be constituted by light of the same or different wavelengths, and consequently the light beams forming the light spots 15 shown in FIG. 2 may have the same wavelength(s) or differ from each other in their wavelengths / wavelength regions. The sensor arrays 31-34 may be built and operated identically or different from each other depending on the expected light spectra or illumination characteristics. For example, the light beams may differ in their temporal characteristics. One or more illumination beams may be formed as a continuous wave illumination, whereas one or more others of the illumination beams may form a pulsed excitation. This would be useful for, e.g., **FLIM** (fluorescence lifetime measurements/microscopy) in combination with standard imaging.

At least some of the illumination light beams may scan the same specimen points one after the other. Their measured signals for the same specimen point, i.e., photon-count values measured with different illumination light beams for the same specimen point, are combined, e.g., averaged or summed. The number of used illumination light beams may be flexibly adapted to an averaging factor set by the controller, e.g., depending on a specific specimen currently under observation or depending on a desired image quality or signal-to-noise ratio (SNR).

The number of illumination light beams may be adapted by, e.g., individually shuttering the respective light beam. Alternatively, the number of beams may be adapted by switching and attenuating the power of each of the respective illumination beams by means of a multi-channel AOTF. A number of activated sensor arrays can be adjusted to match the number of illumination light beams. The number of activated sensor arrays may be adapted by, e.g., setting an operational bias of the respective sensor arrays.

### FIG. 3

FIG. 3 is a cross-sectional view of FIG. 2 and shows the glass plate 13 in a tilted position. The tilted position corrects the misalignment of the light spots 15 illustrated in FIG. 2. FIG. 3 furthermore shows individual transparent plates 23 in front of each sensor array 31-34. The transparent plates 23 can be tilted to compensate for misalignments of the sensor arrays 31-34 relative to each other. For example, due to fabrication difficulties, the precision with which each chip 20 is placed on the PCB 19 may be roughly similar to half a diameter or one diameter of a photon detector 40. Such positioning variations can be compensated for by individually tilting the glass plates 23 in front of the respective chips 20. The glass plates 23 are tilted such that distances between the light spots 15 on the sensor arrays 31-34 match the distances between the sensor arrays 31-34. It is advantageous if this alignment step is only performed initially and then fixed. For this purpose, the individual glass plates 23 are beglued to avoid further movements once aligned. In contrast, the glass plate 13 may be motorized to allow readjustments during / between measurements or when components of the beam path are changed.

Chromatic filters 28 may be optionally provided in front of the sensor arrays 31-34 to allow for a spectrally selective detection. The chromatic filters 28 may be tunable filters such as linearly variable dichroic or rotatory variable dichroic filters or VersaChrome ^{®} variable dichroic filters. In particular in the case of VersaChrome ^{®} variable dichroic filters, the individual glass plates 23 may remain adaptable to be able to compensate shifts introduced by the variable dichroic filters in dependence of the selected filter wavelengths.

### FIG. 4

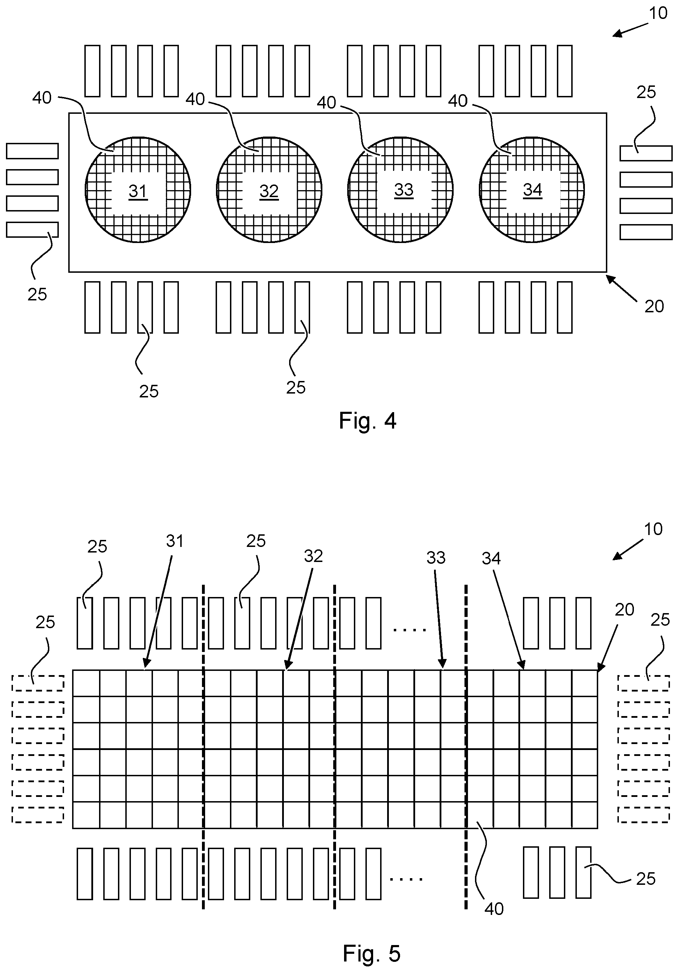

FIG. 4 shows schematically a detector 10 of the light microscope 100. The detector 10 comprises a plurality of sensor arrays 31-34, wherein each of the sensor arrays 31-34 comprises a plurality of photon-counting detector elements 40, in particular SPAD elements. In the example of FIG. 4, the sensor arrays 31-34 are formed as different regions of the same chip 20. More generally, at least some of the sensor arrays 31-34 may be formed as different regions of the same chip 40. On each of the sensor arrays 31-34, a respective detection light spot is formed in operation, allowing parallelized measurements for, e.g., a plurality of scanning light beams.

By using the same chip 20 for a plurality of sensor arrays 31-34, a particularly high precision of the location of the sensor arrays 31-34 relative to each other is provided. This precision may be limited by the lithographic precision, which may be below 350 nm.

Bonding pads 25 are provided at a perimeter of the chip 20 and serve for outputting measured signals / photon counts from the photon-counting detector elements 40. A bonding pad 25 may be understood as an electrically conductive connection area for electrically connecting to, e.g., a PCB on which the chip 20 is mounted or a component mounted on the PCB. If the sensor arrays 31-34 are spaced from each other, as shown in FIG. 4, the comparably large bonding pads 25 can be more easily arranged around the chip 20. However, with the arrangement of sensor arrays 31-34 shown in FIG. 4, the area of the chip between the sensor arrays 31-34 may remain unused. This drawback is overcome with the design depicted in FIG. 5.

### FIG. 5

FIG. 5 shows an alternative detector 10 which varies from the detector of FIG. 4 in that the sensor arrays 31-34 are directly next to each other to form a common array within the same chip 20. Dashed vertical lines illustrate the borders of the sensor arrays 31-34. Photon-counting detector elements 40 of neighbouring sensor arrays are thus directly adjacent and the area of the chip 20 can be efficiently or flexibly used.

A plurality of bonding pads 25 per sensor array 31-34 is provided, and at least some of the sensor arrays 31-34 are arranged (directly) next to each other without any bonding pads 25 in between. In Figures 4 and 5, the sensor arrays 32 and 33 only have bonding pads 25 at their upper and lower side (as seen in the paper plane) but the sensor arrays 32 and 33 have no bonding pads at the right or left side.

The reduced available space for bonding pads 25 makes it more difficult how to arrange the bonding pads 25. This problem is exacerbated by the rather significant size of the bonding pads 25, and will be assessed further below.

In variations of the designs of Figures 4 and 5, all or at least some of the sensor arrays 31-34 are formed by individual chips which are placed within the same package or on a common PCB. The description to FIG. 5 may also apply to such a design in which the common chip 20 is replaced by individual chips for each sensor array 31-34. The chips may be arranged directly next to each other, e.g., with a distance of less than 80 or 100 µm, without any bonding pads in between. Individual chips avoid unnecessarily occupied silicon area while at the same time the arrangement within the same package or on a common PCB allows to achieve a precision in the order of one pixel size (often 10-20 µm). In such a configuration, bonding wires may be a limiting factor for the minimum array pitch.

The number of bonding pads 25 should thus be kept low to allow that bonding pads 25 are only arranged in one dimension (top and bottom sides of a sensor array, or left and right sides of a sensor array). In a variant of the depicted embodiment, the bonding pads 25 shown in dashed lines may be omitted, and thus bonding pads 25 are provided on only two opposite sides of the sensor arrays 31-34. This allows a modular design with individual sensor arrays 31-34 that are placed next to each other. In this case, the sensor arrays 31-34 are not regions of a single component but rather individual chips or components. Different numbers of sensor arrays 31-34 can be chosen in a production process depending on a desired application. Similarly, the embodiment of FIG. 4 can be modified to omit the bonding pads on the left and right sides such that several identical sensor arrays 31-34 with bonding pads 25 on just two opposite sides can be used.

Connecting each photon-counting detector element 40 to an individual bonding pad 25 would be impractical since the pad pitch is in the order of 50 µm and thus significantly larger than the size of a photon-counting detector element 40. Instead, a total number of bonding pads 25 for outputting photon-count numbers or signals may be smaller than a total number of photon-counting detector elements 40. Photon-count numbers or signals of several photon-counting detector elements 40 may then be output through the same bonding pad.

### FIG. 6

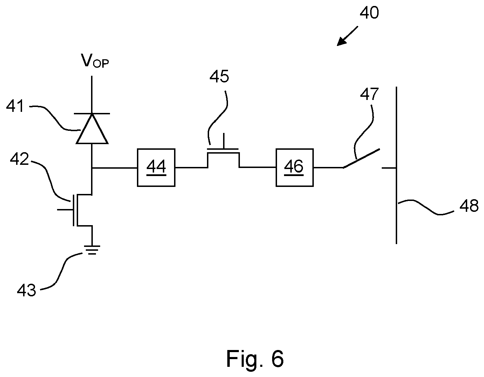

A preferable example for reducing the number of bonding pads will be described with reference to FIG. 6 which shows a detail of the detector 10, namely one of the photon-counting detector elements 40 connected to a common read-out line 48 to which others of the photon-counting detector elements are also connected (not shown). Each photon-counting detector element 40 may be read out in a rolling readout manner, while having a continuous global shutter exposure. The photon-counting detector element 40 comprises a photo-sensitive diode 41, at least two memory elements 44 and 46, a latch 45 and a reset 42. The reset 42 may be formed, for example, with a transistor connected between the photo-sensitive diode 41 and mass 43. Each photon-counting detector element 40 may comprise a respective latch 45 and reset 42. Several or all latches 45 and resets 42 of one of the sensor arrays 31-34 or of the whole detector 10 may be controlled globally, i.e., jointly at the same points in time. The time between two global reset events determines the exposure time. At the end of each exposure time, the latch 45 is controlled to transfer data from the first memory element 44 to the second memory element 46. The second memory element 46 is then read out in a rolling row readout mechanism through a switch 47 which leads to the common read-out line 48. The readout takes place in parallel with the exposure time for a subsequent measurement interval.

The schematic illustration of FIG. 6 shall facilitate understanding of the described contents while further components may be added or some components of FIG. 6 may be removed or replaced. More generally, each photon-counting detector element 40 may comprise at least a first memory element 44 and a second memory element 46 to allow read-out of a measured signal from the second memory element 46 during an exposure time of this photon-counting detector element 40 in which a photon detection event is registered in the first memory element 44. After the second memory element 46 is read out, the signal from the first memory element 44 is transferred to the second memory element 46 and a voltage over a diode 41 of the detector element 40 is restored to allow the next exposure time or measurement.

In SPADs, the SPAD anode capacitance may be used as a 1-bit memory (as the first memory element 44 in this case). Another capacitance may be provided as the second memory element 46. Such an architecture reduces the required number of bonding pads for outputting data. If the memories 44 and 46 are 1-bit memories, the dead time of this pixel is determined by the readout time of the whole array or pixels connected to the same read-out line 48. If ten rows are used, the dead time will be 10x the readout clock period (e.g., 10 ns). This imposes tradeoffs between the number of rows and the pixel dead time. The dependency between the pixel dead time and readout period can be disentangled with per-pixel multi-bit counters. In such cases, a multi-bit counter may be provided for each photo-sensitive diode 41 and connected to the common read-out line 48.

More generally, multi-bit counters may be provided to count several photon detection events of the same photon-counting detector element 40 and/or several photon detection events of different photon-counting detector elements 40. In both cases, the number of required bonding pads 25 can be reduced. The multi-bit counters are included together with the detector elements 40 in the same chip 20 and thus a photon count value is transferred from one of the multi-bit counters through a respective bonding pad 25 out of the chip 20.

Using common read-out lines 48 for several photon-counting detector elements 40 reduces the number of bonding pads 25, and thus can be advantageous in realizing closely arranged sensor arrays 31-34 as shown in Figures 4 and 5.

### FIG. 7

The photon-counting detector elements 40 of each sensor array 31-34 may be arranged in columns and rows. Several or all photon-counting detector elements 40 of the same column may be read out through a common read-out line. Each read-out line may lead to one of the bonding pads 25. The bonding pads 25 of these and other exemplary embodiments may also be replaced with other electrical contacts. Row addresses for the photon-counting detector elements may be used to distinguish between measured signals from the photon-counting detector elements 40 of the same column.

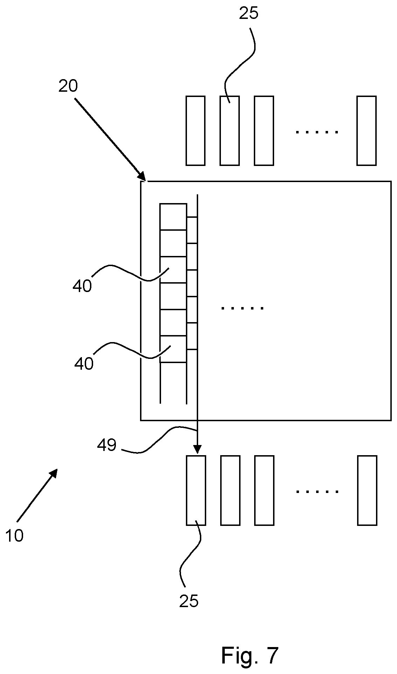

Such an architecture is depicted in FIG. 7 which shows schematically an example of a chip 20 with one or more sensor arrays of photon-counting detector elements 40.

Several of the photon-counting detector elements 40, for example one column, is connected to a common n-bit bus 49 used for row encoding. For simplicity, only one column is shown in FIG. 7 while the chip 20 may comprise a respective n-bit bus 49 for each column of photon-counting detector elements 40. Together with a measured signal, the n-bit bus 49 transmits a row identification or an identification indicative of the read-out photon-counting detector element 40. This architecture may be particularly efficient in case of sparse activity within the same column.

As another example, several photon-counting detector elements 40 may be binned and a common output line may be used to output a combined photon count value for all binned photon-counting detector elements 40. Multi-bit counters may be used in this case. The number of required bonding pads 25 is also reduced in this case.

### FIG. 8

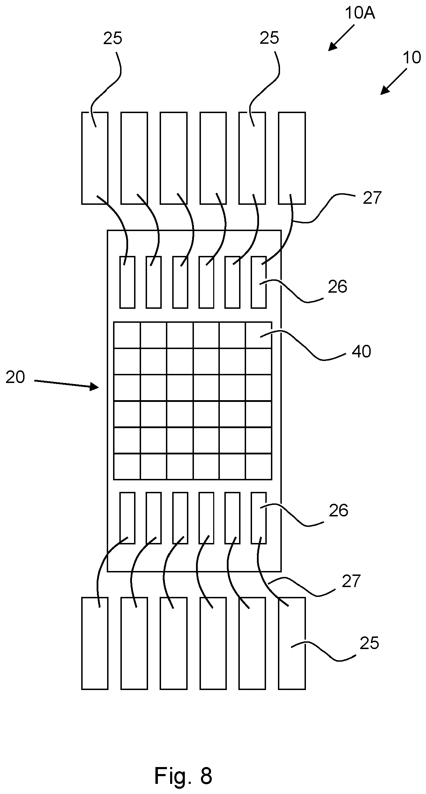

FIG. 8 shows schematically a detector 10 or modular detector unit 10'. Several of the depicted modular detector units 10' may be placed in a row to form the detector of FIG. 5 or 7. FIG. 8 shows electrical contacts 26 and bonding wires 27 of the detector 10 or modular detector unit 10'. The electrical contacts 26 are arranged on the chip 20 next to the columns and/or rows of detector elements 40. Photon-count signals from the detector elements 40 are led to the electrical contacts 26. Bonding wires 27 connect the electrical contacts 26 to bonding pads 25 outside the chip 20. The bonding pads 25 may in particular be arranged on a PCB. The bonding wires 26 may have a length between 1-3 mm and the bonding pads 25 may be considerably larger than the electrical contacts 26, e.g., at least double as large in a width and/or length direction. If several of the shown modular detector units 10' are placed next to each other to form one detector, a staggered design may be used in which the modular detector units 10' overlap. More particularly, areas of the bonding pads 25 may overlap such that the detector elements 40 of different modular detector units 10' come closer to each other. In this way, a pitch or gap between neighboring detector elements of different modular detector units may be avoided. Each modular detector unit may in particular form one of the sensor arrays described with regard to other embodiments.

### FIG. 9

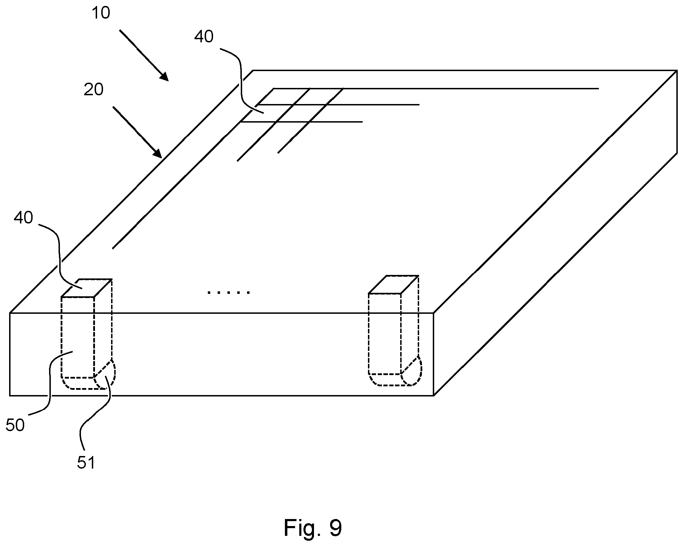

To enable a high-density 2D arrangement of sensor arrays 31-34 without limitations due to a bonding wire length, the bonding pads 25 described above may be replaced by through-silicon vias (TSVs). FIG. 9 shows schematically an example of a detector 10 or modular detector unit 10B which varies from the preceding examples in that TSVs 50 extend through the wafer or die of the chip 20. The TSVs 50 may lead to a ball grid array (BGA) 51 which can be directly connected to a PCB. Other bonding techniques instead of the BGA 51 may also be employed to connect the chip 20 to a PCB. For simplicity, only some of the photon-counting detector elements 40 and TSVs 50 are shown in FIG. 9. The TSVs 50 may replace the bonding pads 25 and lines leading to the bonding pads 25 of other embodiments while all other aspects may be similar to the above-described embodiments. In particular, several photon-counting detector elements 40 may share the same TSV 50. For this purpose, any of the above-described examples for using a common output line for several photon-counting detector elements 40 may be applied to the embodiment of FIG. 9. Alternatively, particularly small TSVs 50 may be used to provide one TSV 50 per detector element 40. In a further variation of the embodiment shown in FIG. 9, several sensor arrays are formed by separate chips 20 instead of different regions within the same chip 20. Compared with one large chip, a plurality of smaller arrays or chips may have advantages in terms of noise, power consumption, uniformity and/or flexibility in design.

### FIG. 10

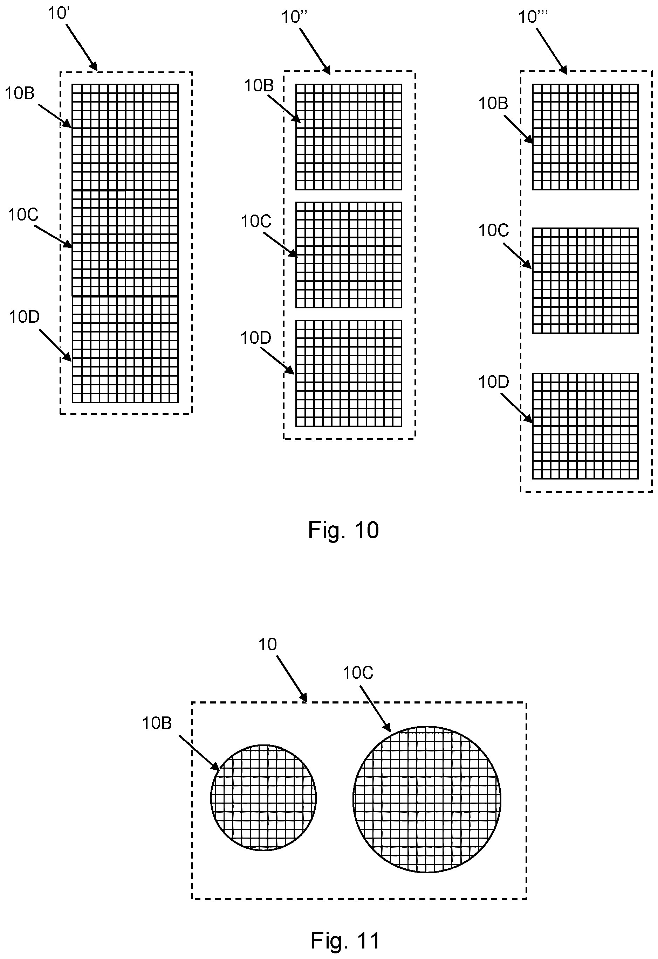

FIG. 10 shows exemplary designs of detectors 10', 10", 10‴ comprising a plurality of modular detector units 10B-10D. Each modular detector unit 10B-10D may be formed, for example, similar to the modular detector unit 10B of FIG. 9 which uses TSVs. Instead of TSVs, each modular detector unit 10B-10D may also use another technology which has no bonding wires in at least one direction of the sensor array (e.g. left-right-direction in FIG. 9). FIG. 10 exemplifies that a plurality of (in particular identical) modular detector units 10B-10D may be combined in different arrangements to form a respective detector. Detector 10' comprises several modular detector units 10B-10D that are placed directly next to each other without spaces to form one common area of photon-counting detector elements. Detector 10" comprises modular detector units 10B-10D that are laterally separated from each other by a gap. In the case of detector 10‴, a gap or pitch between modular detector units 10B-10D is larger than the gaps of detector 10". The same chip design may thus be used for different applications in which different detection areas may be required or preferred. The detectors 10', 10" and 10‴ of FIG. 10 may be used in different microscopes or other measuring devices or, alternatively, the detectors 10', 10" and 10‴ may be used in the same microscope or measuring device.

### FIG. 11

FIG. 11 shows a detector 10 comprising different modular detector units 10B, 10C. The modular detector units 10B, 10C may differ in the respective number of photon-counting detector elements and/or in the respective spectral detection efficiency. In particular, a wavelength-dependent sensitivity of modular detector unit 10B may have a peak sensitivity at a light wavelength differing from that of modular detector unit 10C. To account for a wavelength-dependent size of a PSF, the modular detector units 10B, 10C may have different cross-sectional sizes, wherein the cross-sectional size increases with increasing wavelength of the peak sensitivity. For example, modular detector unit 10B may have a peak sensitivity for blue light, while modular detector unit 10C has a peak sensitivity for red light, and the cross-sectional size of modular detector unit 10C is larger than the size of modular detector unit 10B.

The embodiments described with reference to the Figures are merely for illustrative purpose. The scope of the invention is determined by the appended claims.

### LIST OF REFERENCE SIGNS

- 1: light source
- 2: illumination light
- 2A, 2B, 2C, 2D: illumination light spots
- 3: scanner
- 3A, 3B: beam paths due to scanner position
- 4: optical element
- 5: objective / optical element
- 6: specimen
- 6A: specimen positioning location
- 7: beam splitter
- 8: optical element
- 8A: optical zoom element
- 10, 10', 10", 10‴: detector
- 10A, 10B, 10C, 10D: modular detector units
- 11: detection light
- 13: tiltable transparent plate
- 14: movable transparent wedge
- 15: light spots on detector 10
- 19: printed circuit board (PCB)
- 20: chip
- 21: Peltier cooler
- 23: tiltable transparent plate
- 25: bonding pad
- 26: electrical contact
- 27: bonding wire
- 28: chromatic filter
- 31-34: sensor arrays
- 40: photon-counting detector element
- 41: light-sensitive diode of a detector element 40
- 42: reset of a detector element 40
- 43: mass of a detector element 40
- 44: first memory element of a detector element 40
- 45: latch of a detector element 40
- 46: second memory element of a detector element 40
- 47: switch of a detector element 40
- 48: common read-out line
- 49: n-bit bus
- 50: through-silicon via (TSV)
- 51: ball grid array (BGA)
- 70: controller
- 75: adjustment device
- 100: light microscope
- V_{OP}: voltage applied to diode 41

## Claims

1. A method for operating a light microscope comprising
- emitting and guiding illumination light (2) as a plurality of illumination light beams from one or more light sources (1) towards a specimen positioning location (6A), and forming a plurality of separated illumination light spots (2A, 2B, 2C, 2D) at the specimen positioning location (6A); and
- guiding detection light beams (11) coming from the illumination light spots (2A, 2B, 2C, 2D) at the specimen positioning location (6A) to a detector (10);
the detector (10) comprising a plurality of sensor arrays (31-34), wherein each sensor array (31-34) comprises photon-counting detector elements (40), and the detection light beams (11) form a plurality of light spots (15) on the sensor arrays (31-34), wherein detection light beams (11) from different illumination light spots (2A, 2B, 2C, 2D) at the specimen positioning location (6A) are guided to different sensor arrays (31-34);
**characterized by**
analyzing measured signals from the sensor arrays (31-34) to determine positional information about the light spots (15) on the sensor arrays (31-34), an adjustment process to adjust where the light spots (15) hit the sensor arrays (31-34) based on the positional information; and
for adjusting where the light spots (15) hit the sensor arrays (31-34) during fabrication of the detector (10),
- optical elements (23) are movably placed in front of the sensor arrays (31-34), wherein the optical elements (23) affect a position of the respective light spot (15) on the respective sensor array (31-34),
- illumination light is emitted to form light spots (15) on the sensor arrays (31-34),
- a controller (70) interprets measured signals of the sensor arrays (31-34) to generate positioning commands, and
- the optical elements (23) are moved according to the positioning commands,
after the optical elements (23) are moved or tilted according to the positioning commands, the optical elements (23) are fixated with glue.

2. The method of claim 1, wherein
the adjustment process comprises an adjustment step that affects a positional relationship between all light spots (15) and all sensor arrays (31-34) equally.

3. The method of claim 1 or 2, wherein
in the adjustment process, the sensor arrays (31-34) are jointly moved transverse to an optical axis of the detection light beams (11), and/or
in the adjustment process, a common optical element (13, 14) is adjusted, wherein all illumination or detection light beams (11) are guided via the common optical element (13, 14), and wherein adjustment of the common optical element (13, 14) affects a position of the light spots (15) perpendicular to an optical axis of the detection light beams (11).

4. The method of any one of the preceding claims, wherein
in the adjustment process, the sensor arrays (31-34) are:
jointly tilted relative to an optical axis of the detection light beams (11) depending on differences between the detection light beams (11) and/or
jointly rotated about an optical axis of the detection light beams (11).

5. The method of any one of the preceding claims, wherein
in the adjustment process, at least one optical zoom element (8A) provided in a beam path of the illumination or detection light beams (11) is adjusted to change a pitch between the light spots (15) on the sensor arrays (31-34) such that the pitch matches a pitch of the sensor arrays (31-34).

6. The method of any one of the preceding claims, wherein
at least some of the illumination light beams are scanned over common specimen points,
photon-count values measured with different illumination light beams for the same specimen point are combined, and
a number of used illumination light beams is set according to an averaging factor which is set depending on a specimen under observation.

7. The method of any one of the preceding claims, wherein
for adjusting where the light spots (15) hit the sensor arrays (31-34) during fabrication of the detector (10),
- the plurality of sensor arrays (31-34) are movably placed on a common printed circuit board (19) and operatively connected,
- the illumination light is emitted to form the plurality of light spots (15) on the sensor arrays (31-34),
- a controller (70) interprets measured signals of the sensor arrays (31-34) to generate positioning commands,
- the sensor arrays (31-34) are moved according to the positioning commands.

8. The method of any one of the preceding claims, wherein
as optical elements, tiltable transparent plates (23) are arranged in front of the sensor arrays (31-34), and
after the tiltable transparent plates (23) are tilted according to the positioning commands, the tiltable transparent plates (23) are fixated with glue.

9. The method of any one of the preceding claims, wherein
a binning pattern with a plurality of superpixels is set, wherein each superpixel is formed by jointly reading out several of the photon-counting detector elements (40) to produce a common photon count value;
the binning pattern is set in dependence of the positional information;
a center position of each light spot (15) on the sensor arrays (31-34) is determined, and the superpixels are aligned with regard to the center positions.

10. A light microscope comprising
- at least one light source (1) and optical elements (4, 5) for illuminating a specimen (6) at a specimen positioning location (6A) with a plurality of illumination light beams which form a plurality of separated illumination light spots (2A, 2B, 2C, 2D) at the specimen positioning location (6A);
- a detector (10) comprising photon-counting detector elements (40); and
- a controller (70) configured to control the at least one light source (1) and the detector (10);
the detector (10) includes a plurality of sensor arrays (31-34), each comprising photon-counting detector elements (40) for measuring light spots (15) formed on the sensor arrays (31-34) by detection light beams (11) coming from the specimen (6), wherein detection light beams (11) from different illumination light spots (2A, 2B, 2C, 2D) at the specimen positioning location (6A) are guided to different sensor arrays (31-34);
**characterized in that**
the controller (70) is configured to analyze measured signals from the sensor arrays (31-34) to determine positional information about the light spots (15) on the sensor arrays (31-34), and instruct an adjustment device (75) of the light microscope to adjust where the light spots (15) hit the sensor arrays (31-34) based on the positional information;
for adjusting where the light spots (15) hit the sensor arrays (31-34) during fabrication of the detector (10),
- optical elements (23) are movably placed in front of the sensor arrays (31-34), wherein the optical elements (23) affect a position of the respective light spot (15) on the respective sensor array (31-34),
- illumination light is emitted to form light spots (15) on the sensor arrays (31-34),
- the controller (70) interprets measured signals of the sensor arrays (31-34) to generate positioning commands, and
- the optical elements (23) are moved according to the positioning commands;
after the optical elements (23) are moved or tilted according to the positioning commands, the optical elements (23) are fixated with glue.

11. The light microscope of claim 10, wherein
the sensor arrays (31-34) are arranged on a common printed circuit board (19), and/or the sensor arrays (31-34) are formed as different regions of one chip (20); and
the sensor arrays (31-34) are arranged directly next to each other to form a common array within one chip (20) or on one printed circuit board (19).

12. The light microscope of claim 10 or 11, wherein
a plurality of bonding pads (25) per sensor array (31-34) is provided,
at least some of the sensor arrays (31-34) are arranged directly next to each other without any bonding pads (25) in between;
a total number of bonding pads for outputting measured photon-count signals is smaller than a total number of photon-counting detector elements (40), and measured photon-count signals of several photon-counting detector elements (40) are output through the same bonding pad (25).

13. The light microscope of any one of claims 10 to 12, wherein
each photon-counting detector element (40) comprises at least a first memory element (44) and second memory element (46) to allow read-out of a measured signal from the second memory element (46) during an exposure time in which a photon detection event can be registered in the first memory element (44) of this photon-counting detector element (40);
each photon-counting detector element (40) is formed by a single-photon avalanche detector comprising a SPAD anode which forms the first memory element (44), and the second memory element (46) is configured to receive a measured signal from the first memory element (44).

14. The light microscope of claim 12 or 13, wherein
the photon-counting detector elements (40) of the same sensor array (31-34) are arranged in columns and rows,
a common read-out line (48, 49) connects the photon-counting detector elements (40) of the same column to one of the bonding pads (25), and row addresses for the photon-counting detector elements (40) are used to distinguish between measured signals from the photon-counting detector elements (40) of the same column,
for reducing the number of required bonding pads (25), multi-bit counters are provided which count several photon detection events of the same or different photon-counting detector elements (40).

15. The light microscope of any one of claims 10 to 14, wherein
a plurality of through-silicon vias (50) is provided for each sensor array (31-34), and several of the photon-counting detector elements (40) share one of the through-silicon vias.

## Patentansprüche

1. Verfahren zum Betreiben eines Lichtmikroskops, umfassend
- Aussenden und Führen von Beleuchtungslicht (2) als eine Mehrzahl von Beleuchtungslichtstrahlen von einer oder mehreren Lichtquellen (1) zu einer Probenpositionierungsstelle (6A) und Erzeugen einer Mehrzahl getrennter Beleuchtungslichtflecke (2A, 2B, 2C, 2D) an der Probenpositionierungsstelle (6A); und
- Führen von von den Beleuchtungslichtflecken (2A, 2B, 2C, 2D) an der Probenpositionierungsstelle (6A) kommenden Detektionslichtstrahlen (11) zu einem Detektor (10);
wobei der Detektor (10) eine Mehrzahl von Sensorarrays (31-34) umfasst, wobei jedes Sensorarray (31-34) photonenzählende Detektorelemente (40) umfasst und die Detektionslichtstrahlen (11) eine Mehrzahl von Lichtflecken (15) auf den Sensorarrays (31-34) bilden, wobei Detektionslichtstrahlen (11) von unterschiedlichen Beleuchtungslichtflecken (2A, 2B, 2C, 2D) an der Probenpositionierungsstelle (6A) zu unterschiedlichen Sensorarrays (31-34) geführt werden;
**dadurch gekennzeichnet, dass**
gemessene Signale der Sensorarrays (31-34) analysiert werden, um Positionsinformationen über die Lichtflecken (15) auf den Sensorarrays (31-34) zu bestimmen,
ein Justierprozess zum Justieren, wo die Lichtflecken (15) auf den Sensorarrays (31-34) treffen, auf Grundlage der Positionsinformationen durchgeführt wird; und
zum Justieren, wo die Lichtflecken (15) auf den Sensorarrays (31-34) während der Herstellung des Detektors (10) treffen,
- optische Elemente (23) beweglich vor den Sensorarrays (31-34) angeordnet werden, wobei die optischen Elemente (23) eine Position des jeweiligen Lichtflecks (15) auf dem jeweiligen Sensorarray (31-34) beeinflussen,
- Beleuchtungslicht ausgesendet wird, um Lichtflecken (15) auf den Sensorarrays (31-34) zu bilden,
- eine Steuereinrichtung (70) gemessene Signale der Sensorarrays (31-34) interpretiert, um Positionierungsbefehle zu erzeugen, und
- die optischen Elemente (23) entsprechend den Positionierungsbefehlen bewegt werden;
wobei die optischen Elemente (23), nachdem sie entsprechend den Positionierungsbefehlen bewegt oder gekippt worden sind, mit Klebstoff fixiert werden.

2. Verfahren nach Anspruch 1, wobei
der Justierprozess einen Justierschritt umfasst, der eine Positionsbeziehung zwischen allen Lichtflecken (15) und allen Sensorarrays (31-34) gleichermaßen beeinflusst.

3. Verfahren nach Anspruch 1 oder 2, wobei
im Justierprozess die Sensorarrays (31-34) gemeinsam quer zu einer optischen Achse der Detektionslichtstrahlen (11) bewegt werden, und/oder im Justierprozess ein gemeinsames optisches Element (13, 14) justiert wird, wobei alle Beleuchtungs- oder Detektionslichtstrahlen (11) über das gemeinsame optische Element (13, 14) geführt werden und wobei ein Justieren des gemeinsamen optischen Elements (13, 14) eine Position der Lichtflecken (15) senkrecht zu einer optischen Achse der Detektionslichtstrahlen (11) beeinflusst.

4. Verfahren nach einem der vorhergehenden Ansprüche, wobei
im Justierprozess die Sensorarrays (31-34)
in Abhängigkeit von Unterschieden zwischen den Detektionslichtstrahlen (11) gemeinsam relativ zu einer optischen Achse der Detektionslichtstrahlen (11) gekippt werden und/oder
gemeinsam um eine optische Achse der Detektionslichtstrahlen (11) gedreht werden.

5. Verfahren nach einem der vorhergehenden Ansprüche, wobei
im Justierprozess mindestens ein optisches Zoomelement (8A), das in einem Strahlengang der Beleuchtungs- oder Detektionslichtstrahlen (11) vorgesehen ist, justiert wird, um einen Abstand zwischen den Lichtflecken (15) auf den Sensorarrays (31-34) so zu verändern, dass der Abstand einem Abstand der Sensorarrays (31-34) entspricht.

6. Verfahren nach einem der vorhergehenden Ansprüche, wobei
mindestens einige der Beleuchtungslichtstrahlen über gemeinsame Probenpunkte abgetastet werden,
mit unterschiedlichen Beleuchtungslichtstrahlen für denselben Probenpunkt gemessene Photonenzählwerte kombiniert werden und
eine Anzahl verwendeter Beleuchtungslichtstrahlen entsprechend einem Mittelungsfaktor festgelegt wird, der in Abhängigkeit von einer beobachteten Probe festgelegt wird.

7. Verfahren nach einem der vorhergehenden Ansprüche, wobei
zum Justieren, wo die Lichtflecken (15) auf den Sensorarrays (31-34) während der Herstellung des Detektors (10) treffen,
- die Mehrzahl von Sensorarrays (31-34) beweglich auf einer gemeinsamen Leiterplatte (19) angeordnet und betriebsmäßig verbunden werden,
- das Beleuchtungslicht ausgesendet wird, um die Mehrzahl von Lichtflecken (15) auf den Sensorarrays (31-34) zu bilden,
- eine Steuereinrichtung (70) gemessene Signale der Sensorarrays (31-34) interpretiert, um Positionierungsbefehle zu erzeugen, und
- die Sensorarrays (31-34) entsprechend den Positionierungsbefehlen bewegt werden.

8. Verfahren nach einem der vorhergehenden Ansprüche, wobei
als optische Elemente kippbare transparente Platten (23) vor den Sensorarrays (31-34) angeordnet sind und
die kippbaren transparenten Platten (23), nachdem sie entsprechend den Positionierungsbefehlen gekippt worden sind, mit Klebstoff fixiert werden.

9. Verfahren nach einem der vorhergehenden Ansprüche, wobei
ein Binning-Muster mit einer Mehrzahl von Superpixeln festgelegt wird, wobei jedes Superpixel durch gemeinsames Auslesen mehrerer der photonenzählenden Detektorelemente (40) gebildet wird, um einen gemeinsamen Photonenzählwert zu erzeugen;
das Binning-Muster in Abhängigkeit von den Positionsinformationen festgelegt wird;
eine Mittelpunktposition jedes Lichtflecks (15) auf den Sensorarrays (31-34) bestimmt wird und die Superpixel hinsichtlich der Mittelpunktpositionen angeglichen werden.

10. Lichtmikroskop, umfassend
- mindestens eine Lichtquelle (1) und optische Elemente (4, 5) zum Beleuchten einer Probe (6) an einer Probenpositionierungsstelle (6A) mit einer Mehrzahl von Beleuchtungslichtstrahlen, die eine Mehrzahl getrennter Beleuchtungslichtflecke (2A, 2B, 2C, 2D) an der Probenpositionierungsstelle (6A) bilden;
- einen Detektor (10), der photonenzählende Detektorelemente (40) umfasst; und
- eine Steuereinrichtung (70), die dazu eingerichtet ist, die mindestens eine Lichtquelle (1) und den Detektor (10) zu steuern;
wobei der Detektor (10) eine Mehrzahl von Sensorarrays (31-34) umfasst, die jeweils photonenzählende Detektorelemente (40) zum Messen von Lichtflecken (15) umfassen, die auf den Sensorarrays (31-34) durch von der Probe (6) kommende Detektionslichtstrahlen (11) gebildet werden, wobei Detektionslichtstrahlen (11) von unterschiedlichen Beleuchtungslichtflecken (2A, 2B, 2C, 2D) an der Probenpositionierungsstelle (6A) zu unterschiedlichen Sensorarrays (31-34) geführt werden;
**dadurch gekennzeichnet, dass**
die Steuereinrichtung (70) dazu eingerichtet ist, gemessene Signale der Sensorarrays (31-34) zu analysieren, um Positionsinformationen über die Lichtflecken (15) auf den Sensorarrays (31-34) zu bestimmen, und eine Justiereinrichtung (75) des Lichtmikroskops anzuweisen, zu justieren, wo die Lichtflecken (15) auf den Sensorarrays (31-34) treffen, auf Grundlage der Positionsinformationen;
wobei zum Justieren, wo die Lichtflecken (15) auf den Sensorarrays (31-34) während einer Herstellung des Detektors (10) treffen,
- optische Elemente (23) beweglich vor den Sensorarrays (31-34) angeordnet werden, wobei die optischen Elemente (23) eine Position des jeweiligen Lichtflecks (15) auf dem jeweiligen Sensorarray (31-34) beeinflussen,
- Beleuchtungslicht ausgesendet wird, um Lichtflecken (15) auf den Sensorarrays (31-34) zu bilden,
- die Steuereinrichtung (70) gemessene Signale der Sensorarrays (31-34) interpretiert, um Positionierungsbefehle zu erzeugen, und
- die optischen Elemente (23) entsprechend den Positionierungsbefehlen bewegt werden;
wobei die optischen Elemente (23), nachdem sie entsprechend den Positionierungsbefehlen bewegt oder gekippt worden sind, mit Klebstoff fixiert werden.

11. Lichtmikroskop nach Anspruch 10, wobei
die Sensorarrays (31-34) auf einer gemeinsamen Leiterplatte (19) angeordnet sind und/oder die Sensorarrays (31-34) als unterschiedliche Bereiche von einem Chip (20) ausgebildet sind; und
die Sensorarrays (31-34) direkt nebeneinander angeordnet sind, um ein gemeinsames Array innerhalb eines Chips (20) oder auf einer Leiterplatte (19) zu bilden.

12. Lichtmikroskop nach Anspruch 10 oder 11, wobei
für jedes Sensorarray (31-34) eine Mehrzahl von Bondpads (25) vorgesehen ist,
mindestens einige der Sensorarrays (31-34) direkt nebeneinander ohne dazwischenliegende Bondpads (25) angeordnet sind;
eine Gesamtanzahl von Bondpads zum Ausgeben gemessener Photonenzählsignale kleiner ist als eine Gesamtanzahl von photonenzählenden Detektorelementen (40), und gemessene Photonenzählsignale mehrerer photonenzählender Detektorelemente (40) über dasselbe Bondpad (25) ausgegeben werden.

13. Lichtmikroskop nach einem der Ansprüche 10 bis 12, wobei
jedes photonenzählende Detektorelement (40) mindestens ein erstes Speicherelement (44) und ein zweites Speicherelement (46) umfasst, um ein Auslesen eines gemessenen Signals aus dem zweiten Speicherelement (46) während einer Belichtungszeit zu ermöglichen, in der ein Photonendetektionsereignis in dem ersten Speicherelement (44) dieses photonenzählenden Detektorelements (40) registriert werden kann;
jedes photonenzählende Detektorelement (40) durch einen Einzelphotonen-Lawinendetektor gebildet ist, der eine SPAD-Anode umfasst, welche das erste Speicherelement (44) bildet, und das zweite Speicherelement (46) dazu eingerichtet ist, ein gemessenes Signal von dem ersten Speicherelement (44) zu empfangen.

14. Lichtmikroskop nach Anspruch 12 oder 13, wobei
die photonenzählenden Detektorelemente (40) desselben Sensorarrays (31-34) in Spalten und Zeilen angeordnet sind,
eine gemeinsame Ausleseleitung (48, 49) die photonenzählenden Detektorelemente (40) derselben Spalte mit einem der Bondpads (25) verbindet und Zeilenadressen für die photonenzählenden Detektorelemente (40) verwendet werden, um zwischen gemessenen Signalen der photonenzählenden Detektorelemente (40) derselben Spalte zu unterscheiden;
zum Verringeren der Anzahl benötigter Bondpads (25) Mehrbit-Zähler vorgesehen sind, die mehrere Photonendetektionsereignisse derselben oder unterschiedlicher photonenzählender Detektorelemente (40) zählen.

15. Lichtmikroskop nach einem der Ansprüche 10 bis 14, wobei
für jedes Sensorarray (31-34) eine Mehrzahl von Through-Silicon-Vias (50) vorgesehen ist und mehrere der photonenzählenden Detektorelemente (40) sich eines der Through-Silicon-Vias teilen.

## Revendications

1. Procédé de fonctionnement d'un microscope optique comprenant
- l'émission et le guidage de lumière d'éclairage (2) sous la forme d'une pluralité de faisceaux lumineux d'éclairage depuis une ou plusieurs sources de lumière (1) vers un emplacement de positionnement d'échantillon (6A), et la formation d'une pluralité de taches de lumière d'éclairage séparées (2A, 2B, 2C, 2D) à l'emplacement de positionnement d'échantillon (6A) ; et
- le guidage de faisceaux lumineux de détection (11) issus des taches de lumière d'éclairage (2A, 2B, 2C, 2D) à l'emplacement de positionnement d'échantillon (6A) jusqu'à un détecteur (10) ;
le détecteur (10) comprenant une pluralité de réseaux de capteurs (31-34), chaque réseau de capteurs (31-34) comprenant des éléments détecteurs comptant les photons (40), et les faisceaux lumineux de détection (11) formant une pluralité de taches de lumière (15) sur les réseaux de capteurs (31-34), les faisceaux lumineux de détection (11) provenant de différentes taches de lumière d'éclairage (2A, 2B, 2C, 2D) à l'emplacement de positionnement d'échantillon (6A) étant guidés jusqu'à différents réseaux de capteurs (31-34) ;
**caractérisé par**
l'analyse de signaux mesurés provenant des réseaux de capteurs (31-34) pour déterminer des informations de position sur les taches de lumière (15) sur les réseaux de capteurs (31-34), un processus de réglage pour régler l'endroit où les taches de lumière (15) frappent les réseaux de capteurs (31-34) sur la base des informations de position ; et en ce que,
pour régler l'endroit où les taches de lumière (15) frappent les réseaux de capteurs (31-34) pendant la fabrication du détecteur (10),
- des éléments optiques (23) sont placés de façon mobile devant les réseaux de capteurs (31-34), les éléments optiques (23) affectant une position de la tache de lumière respective (15) sur le réseau de capteurs respectif (31-34),
- de la lumière d'éclairage est émise pour former des taches de lumière (15) sur les réseaux de capteurs (31-34),
- un contrôleur (70) interprète des signaux mesurés des réseaux de capteurs (31-34) pour générer des commandes de positionnement, et
- les éléments optiques (23) sont déplacés en fonction des commandes de positionnement ;
une fois que les éléments optiques (23) ont été déplacés ou inclinés en fonction des commandes de positionnement, les éléments optiques (23) sont fixés avec de la colle.

2. Procédé de la revendication 1, dans lequel
le processus de réglage comprend une étape de réglage qui affecte de façon identique une relation de position entre toutes les taches de lumière (15) et tous les réseaux de capteurs (31-34).

3. Procédé de la revendication 1 ou 2, dans lequel,
dans le processus de réglage, les réseaux de capteurs (31-34) sont déplacés conjointement transversalement à un axe optique des faisceaux lumineux de détection (11), et/ou
dans le processus de réglage, un élément optique commun (13, 14) est réglé, tous les faisceaux lumineux d'éclairage ou de détection (11) étant guidés par l'élément optique commun (13, 14), et le réglage de l'élément optique commun (13, 14) affectant une position des taches de lumière (15) perpendiculairement à un axe optique des faisceaux lumineux de détection (11).

4. Procédé de l'une quelconque des revendications précédentes, dans lequel,
dans le processus de réglage, les réseaux de capteurs (31-34) sont :
inclinés conjointement par rapport à un axe optique des faisceaux lumineux de détection (11) en fonction de différences entre les faisceaux lumineux de détection (11) et/ou
tournés conjointement autour d'un axe optique des faisceaux lumineux de détection (11).

5. Procédé de l'une quelconque des revendications précédentes, dans lequel,
dans le processus de réglage, au moins un élément de zoom optique (8A) disposé sur un trajet de faisceau des faisceaux lumineux d'éclairage ou de détection (11) est réglé pour modifier un pas entre les taches de lumière (15) sur les réseaux de capteurs (31-34) de telle sorte que le pas corresponde à un pas des réseaux de capteurs (31-34).

6. Procédé de l'une quelconque des revendications précédentes, dans lequel
au moins certains des faisceaux lumineux d'éclairage sont balayés sur des points d'échantillon communs,
des valeurs de comptage de photons mesurées avec différents faisceaux lumineux d'éclairage pour le même point d'échantillon sont combinées, et
un nombre de faisceaux lumineux d'éclairage utilisés est établi en fonction d'un facteur de moyennage qui est défini en fonction d'un échantillon en cours d'observation.

7. Procédé de l'une quelconque des revendications précédentes, dans lequel,
pour régler l'endroit où les taches de lumière (15) frappent les réseaux de capteurs (31-34) pendant la fabrication du détecteur (10),
- la pluralité de réseaux de capteurs (31-34) sont placés de façon mobile sur une carte de circuit imprimé commune (19) et fonctionnellement connectés,
- la lumière d'éclairage est émise pour former la pluralité de taches de lumière (15) sur les réseaux de capteurs (31-34),
- un contrôleur (70) interprète des signaux mesurés des réseaux de capteurs (31-34) pour générer des commandes de positionnement,
- les réseaux de capteurs (31-34) sont déplacés en fonction des commandes de positionnement.

8. Procédé de l'une quelconque des revendications précédentes, dans lequel,
comme éléments optiques, des plaques transparentes inclinables (23) sont disposées devant les réseaux de capteurs (31-34), et
une fois que les plaques transparentes inclinables (23) ont été inclinées en fonction des commandes de positionnement, les plaques transparentes inclinables (23) sont fixées avec de la colle.

9. Procédé de l'une quelconque des revendications précédentes, dans lequel
un motif de regroupement avec une pluralité de superpixels est établi, chaque superpixel étant formé par lecture conjointe de plusieurs des éléments détecteurs comptant les photons (40) pour produire une valeur de comptage de photons commune ;
le motif de regroupement est établi en fonction des informations de position ; une position centrale de chaque tache de lumière (15) sur les réseaux de capteurs (31-34) est déterminée, et les superpixels sont alignés par rapport aux positions centrales.

10. Microscope optique comprenant
- au moins une source de lumière (1) et des éléments optiques (4, 5) destinés à éclairer un échantillon (6) à un emplacement de positionnement d'échantillon (6A) avec une pluralité de faisceaux lumineux d'éclairage qui forment une pluralité de taches de lumière d'éclairage séparées (2A, 2B, 2C, 2D) à l'emplacement de positionnement d'échantillon (6A) ;
- un détecteur (10) comportant des éléments détecteurs comptant les photons (40) ; et
- un contrôleur (70) conçu pour contrôler l'au moins une source de lumière (1) et le détecteur (10) ;
le détecteur (10) comportant une pluralité de réseaux de capteurs (31-34), chacun comprenant des éléments détecteurs comptant les photons (40) destinés à mesurer des taches de lumière (15) formées sur les réseaux de capteurs (31-34) par des faisceaux lumineux de détection (11) issus de l'échantillon (6), des faisceaux lumineux de détection (11) provenant de différentes taches de lumière d'éclairage (2A, 2B, 2C, 2D) à l'emplacement de positionnement de l'échantillon (6A) étant guidés jusqu'à différents réseaux de capteurs (31-34) ;
**caractérisé en ce que**
le contrôleur (70) est conçu pour analyser des signaux mesurés provenant des réseaux de capteurs (31-34) afin de déterminer des informations de position sur les taches de lumière (15) sur les réseaux de capteurs (31-34), et donner l'instruction à un dispositif de réglage (75) du microscope optique de régler l'endroit où les taches de lumière (15) frappent les réseaux de capteurs (31-34) sur la base des informations de position ;
pour régler l'endroit où les taches de lumière (15) frappent les réseaux de capteurs (31-34) pendant la fabrication du détecteur (10),
- des éléments optiques (23) sont placés de façon mobile devant les réseaux de capteurs (31-34), les éléments optiques (23) affectant une position de la tache de lumière respective (15) sur le réseau de capteurs respectif (31-34),
- de la lumière d'éclairage est émise pour former des taches de lumière (15) sur les réseaux de capteurs (31-34),
- le contrôleur (70) interprète des signaux mesurés des réseaux de capteurs (31-34) pour générer des commandes de positionnement, et
- les éléments optiques (23) sont déplacés en fonction des commandes de positionnement ;
une fois que les éléments optiques (23) ont été déplacés ou inclinés en fonction des commandes de positionnement, les éléments optiques (23) sont fixés avec de la colle.

11. Microscope optique de la revendication 10, dans lequel
les réseaux de capteurs (31-34) sont disposés sur une carte de circuit imprimé commune (19), et/ou les réseaux de capteurs (31-34) sont formés comme des régions différentes d'une puce (20) ; et
les réseaux de capteurs (31-34) sont disposés les uns juste à côté des autres pour former un réseau commun à l'intérieur d'une puce (20) ou sur une carte de circuit imprimé (19).

12. Microscope optique de la revendication 10 ou 11, dans lequel
une pluralité de plots de connexion (25) est prévue par réseau de capteurs (31-34),
au moins certains des réseaux de capteurs (31-34) sont disposés les uns juste à côté des autres sans plots de connexion (25) entre eux ;
un nombre total de plots de connexion destinés à délivrer des signaux de comptage de photons mesurés est inférieur à un nombre total d'éléments détecteurs comptant les photons (40), et des signaux de comptage de photons mesurés de plusieurs éléments détecteurs comptant les photons (40) sont délivrés par le même plot de connexion (25).

13. Microscope optique de l'une quelconque des revendications 10 à 12,
dans lequel
chaque élément détecteur comptant les photons (40) comprend au moins un premier élément de mémoire (44) et un deuxième élément de mémoire (46) pour permettre la lecture d'un signal mesuré depuis le deuxième élément de mémoire (46) pendant un temps d'exposition pendant lequel un événement de détection de photons peut être enregistré dans le premier élément mémoire (44) de cet élément détecteur comptant les photons (40) ;
chaque élément détecteur comptant les photons (40) est constitué d'un détecteur à avalanche monophotonique comprenant une anode SPAD qui constitue le premier élément de mémoire (44), et le deuxième élément de mémoire (46) est conçu pour recevoir un signal mesuré provenant du premier élément de mémoire (44).

14. Microscope optique de la revendication 12 ou 13, dans lequel
les éléments détecteurs comptant les photons (40) du même réseau de capteurs (31-34) sont disposés en colonnes et en rangées,
une ligne de lecture commune (48, 49) relie les éléments détecteurs comptant les photons (40) de la même colonne à un des plots de connexion (25), et des adresses de rangée pour les éléments détecteurs comptant les photons (40) sont utilisées pour établir une distinction entre signaux mesurés provenant des éléments détecteurs comptant les photons (40) de la même colonne ;
afin de réduire le nombre de plots de connexion nécessaires (25), sont prévus des compteurs multibits qui comptent plusieurs événements de détection de photons du même élément détecteur comptant les photons (40) ou de différents éléments détecteurs comptant les photons (40).

15. Microscope optique de l'une quelconque des revendications 10 à 14,
dans lequel
une pluralité de vias traversant le silicium (50) est prévue pour chaque réseau de capteurs (31-34), et plusieurs des éléments détecteurs comptant les photons (40) partagent une des interconnexions verticales.
